# FASCICULE DE BREVET EUROPEEN

(11) **EP 4 062 813 B1**
(45) Date de publication et mention de la délivrance du brevet: **08.11.2023**
(21) Numéro de dépôt: 22162719.3
(22) Date de dépôt: 17.03.2022
(51) Int. Cl.: A47J 45/06, A47J 45/07

(54) **RÉCIPIENT DE CUISSON MUNI D'UNE POIGNÉE RIVETÉE AMELIORÉE**
KOCHBEHÄLTER MIT VERBESSERTEM GENIETETEM GRIFF
COOKING VESSEL PROVIDED WITH AN IMPROVED RIVETED HANDLE

(30) Priorité: 24.03.2021 FR 2102949
(43) Date de publication de la demande: 28.09.2022
(73) Titulaire: SEB S.A., 69130 Ecully (FR)
(72) Inventeur: LORTHIOIR, Christophe, 74150 BLOYE (FR); PASQUINI, Ludovic, 74960 CRAN-GEVRIER (FR)
(74) Mandataire: SEB Développement

(56) Documents cités:
- FR-A- 1 258 876
- US-A- 4 724 576
- US-A1- 2015 114 973

## Description

### Domaine technique

La présente invention concerne un récipient de cuisson comportant une poignée rivetée, notamment une poêle, une casserole, une sauteuse ou un faitout.

### Etat de la technique

Il est connu du document US20150114973 un récipient de cuisson comportant une paroi latérale et une poignée. La poignée comprend une pièce de liaison fixée sur la paroi latérale par des rivets. Chaque rivet comporte un bouterollage s'étendant vers l'extérieur du récipient de cuisson et de la pièce de liaison, radialement à la paroi latérale. Un tel récipient de cuisson comporte généralement une surface interne qui comporte un revêtement, notamment antiadhésif, ou un traitement de surface.

Ainsi, lorsqu'un tel récipient de cuisson est rangé par empilage dans un récipient de cuisson de même type et de taille légèrement plus grande, le bouterollage de chaque rivet peut venir en appui sur la surface interne du récipient de cuisson de taille légèrement plus grande et ainsi dégrader le revêtement ou le traitement de surface lors de chocs ou de déplacements relatifs entre les récipients de cuisson.

On observera le même phénomène lors du transport du site de production vers le lieu de vente ou chez le client si le récipient de cuisson est livré en kit en étant rangé par empilage dans un récipient de cuisson de même type et de taille légèrement plus grande.

On connait également du document FR1258876 un récipient de cuisson comportant une paroi latérale et une poignée, la poignée comprenant une pièce de liaison fixée sur la paroi latérale par des rivets.

### Résumé de l'invention

La présente invention vise à remédier à ces inconvénients.

Le problème technique à la base de l'invention consiste à proposer un récipient de cuisson qui peut être rangé par empilage dans un récipient de cuisson de même type et de taille légèrement plus grande sans risque de dégradation du récipient de cuisson de même type et de taille légèrement plus grande.

Un autre but de l'invention est de proposer un récipient de cuisson qui présente une conception simple et économique à mettre en oeuvre.

A cet effet, l'invention a pour objet un récipient de cuisson comportant une paroi latérale et une poignée, ladite poignée comprenant une pièce de liaison fixée sur la paroi latérale par des rivets, chaque rivet comportant un bouterollage qui s'étend vers l'extérieur du récipient de cuisson, radialement à la paroi latérale, ledit bouterollage comportant une extrémité libre qui est agencée à une distance D1 de la paroi latérale, caractérisé en ce que la pièce de liaison comporte au moins un bossage qui s'étend radialement à la paroi latérale, ledit au moins un bossage comprenant une extrémité libre arrondie qui est agencée à une distance D2 de la paroi latérale, la distance D2 étant supérieure à la distance D1.

Nous appellerons dans ce qui suit un récipient de cuisson plus grand, un récipient de cuisson de même type et de taille légèrement plus grande que le récipient de cuisson considéré.

Par arrondie, on comprend que l'extrémité libre présente au moins une forme arrondie dans un plan de coupe transversale de l'au moins un bossage, le plan de coupe s'étendant radialement à la paroi latérale.

L'extrémité libre arrondie de l'au moins un bossage est destinée à venir en appui avant l'extrémité libre du bouterollage sur une surface interne d'un récipient de cuisson plus grand lorsque le récipient de cuisson est rangé par empilage dans le récipient de cuisson plus grand. Ainsi, l'extrémité libre arrondie qui présente une forme non agressive, ne dégrade pas la surface interne du récipient de cuisson plus grand en cas de chocs ou de mouvements relatifs entre les récipients de cuisson.

L'extrémité libre arrondie empêche que les bouterollages ne touchent la surface interne du récipient de cuisson plus grand.

Avantageusement, la différence entre la distance D2 et la distance D1 est supérieure à 1 millimètre, de préférence supérieure à 2 millimètres.

Ainsi, l'extrémité libre du bouterollage est maintenu à distance avec une bonne marge de sécurité de la surface interne du récipient de cuisson plus grand par l'extrémité libre arrondie de l'au moins un bossage lorsque le récipient de cuisson est rangé par empilage dans le récipient de cuisson plus grand.

De préférence, la pièce de liaison est réalisée en un acier inoxydable présentant une finition polie au niveau de l'extrémité libre arrondie.

Ainsi l'extrémité arrondie est lisse et ne présente aucune aspérité qui pourrait rayer la surface interne du récipient de cuisson plus grand.

Avantageusement, la pièce de liaison est fixée sur la paroi latérale par deux rivets, l'au moins un bossage étant agencé entre les deux rivets.

Ainsi, avec un seul bossage, les deux bouterollages des deux rivets sont écartés de la surface interne du récipient de cuisson plus grand.

De préférence, les deux rivets sont agencés dans un plan horizontal H1 et le bossage est agencé dans un plan horizontal H2, Le plan horizontal H1 étant séparé du plan horizontal H2 par une distance inférieure à 10 millimètres.

Ainsi, le bossage est agencé au plus près des bouterollages des rivets. L'agencement du bossage dans un plan horizontal H2 situé au-dessus du plan horizontal H1 permet de mettre en oeuvre moins de matière, notamment dans une partie basse de la pièce de liaison.

Avantageusement, l'au moins un bossage entoure au moins partiellement au moins un rivet.

On comprend que l'extrémité arrondie comporte une ligne crête dont les points sont à la même distance D2 de la paroi latérale.

Ainsi, l'extrémité libre arrondie de l'au moins un bossage entoure au moins partiellement le bouterollage qui ne peut entrer en contact avec la surface interne du récipient de cuisson plus grand.

De préférence, l'au moins un bossage présente une forme annulaire qui entoure au moins un rivet.

Ainsi, l'extrémité libre arrondie de l'au moins un bossage entoure complètement le bouterollage avec la garantie qu'il n'entrera pas en contact avec la surface interne du récipient de cuisson plus grand.

De manière avantageuse, la pièce de liaison est fixée sur la paroi latérale par deux rivets, l'au moins un bossage présentant une forme annulaire qui entoure les deux rivets.

Avantageusement, l'extrémité libre arrondie de l'au moins un bossage comporte un rayon R supérieur à 2 millimètres.

On comprend que le rayon est mesuré dans un plan de coupe transversale de l'au moins un bossage, qui s'étend radialement à la paroi latérale.

Ainsi, l'extrémité libre arrondie peut glisser sur la surface interne du récipient plus grand sans la dégrader.

De préférence, la poignée comporte une partie de préhension agencée sur la pièce de liaison de manière amovible.

Avantageusement, le récipient de cuisson est une poêle, une casserole, une sauteuse ou un faitout.

De manière avantageuse, le récipient de cuisson comprend une surface interne qui comporte un revêtement ou un traitement de surface.

De manière avantageuse, le récipient de cuisson comprend une surface interne réalisée en aluminium, la surface interne comportant un revêtement antiadhésif.

De manière avantageuse, le récipient de cuisson comprend une surface interne réalisée en acier inoxydable, la surface interne étant polie.

De manière avantageuse, la pièce de liaison est réalisée à partir d'un feuillard métallique, le bossage étant réalisé par une opération d'emboutissage.

### Brève description des figures

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
[Fig 1] La figure 1 est une vue en perspective d'un récipient de cuisson selon un premier mode particulier de réalisation de l'invention,
[Fig 2] La figure 2 est une vue en perspective du récipient de cuisson de la figure 1, notamment de la pièce de liaison rivetée munie d'un bossage,
[Fig 3] La figure 3 est une vue en coupe partielle suivant le plan de coupe horizontal fractionné III-III du récipient de cuisson de la figure 2,
[Fig 4] La figure 4 est une vue en coupe partielle suivant le plan de coupe vertical IV-IV du récipient de cuisson de la figure 2, le récipient de cuisson étant inséré dans un récipient de cuisson plus grand,
[Fig 5] La figure 5 est une vue en perspective d'un récipient de cuisson selon un deuxième mode particulier de réalisation de l'invention, notamment de la pièce de liaison rivetée munie d'un bossage,
[Fig 6] La figure 6 est une vue en coupe partielle suivant le plan de coupe vertical VI-VI du récipient de cuisson de la figure 5.
[Fig 7] La figure 7 est une vue en perspective d'un récipient de cuisson selon une variante de réalisation du deuxième mode particulier de réalisation de l'invention, notamment de la pièce de liaison rivetée munie d'un bossage.

Seuls les éléments nécessaires à la compréhension de l'invention ont été représentés. Pour faciliter la lecture des dessins, les mêmes éléments portent les mêmes références d'une figure à l'autre.

On notera que dans ce document, les termes "horizontal", "vertical", "inférieur", "supérieur", "haut", "bas", "avant", "arrière", "longitudinal", "transversal", employés pour décrire le récipient de cuisson font référence à ce récipient de cuisson en situation d'usage, lorsqu'il repose à plat sur un plan de travail ou un appareil de chauffage.

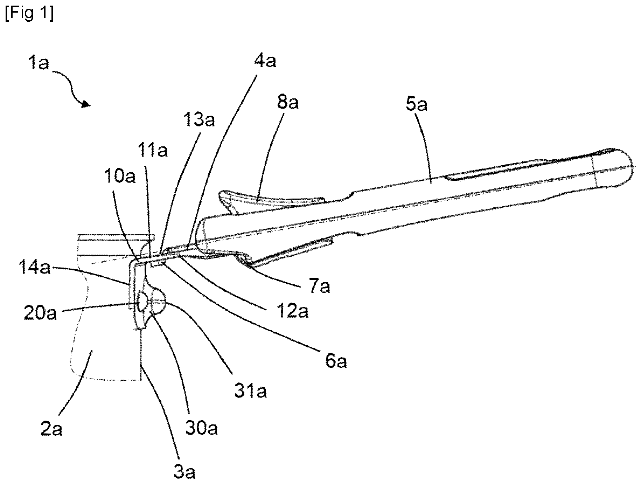

Dans un premier mode de réalisation représenté aux figures 1 à 4, un récipient de cuisson 1a qui est une casserole comporte une calotte 2a munie d'une paroi latérale 3a et une poignée 4a. La poignée 4a comporte une partie de préhension 5a et une pièce de liaison 10a. La pièce de liaison 10a est fixée sur la paroi latérale 3. La partie de préhension 5a est agencée sur la pièce de liaison 10a de manière amovible. La pièce de liaison 10a comporte une portion radiale 11a qui s'étend radialement par rapport à la paroi latérale 3a dans un plan sensiblement horizontal, parallèle au plan de pose de la calotte 2a pour former une extrémité libre 12a. La portion radiale 11a comporte une ouverture 13a sensiblement rectangulaire. La poignée 4a s'étend selon un axe longitudinal et la partie de préhension 5a comprend à une extrémité un bec 6a à double cambrage (Fig 1) destiné à coopérer avec l'ouverture 13a pour assembler ou désassembler la partie de préhension 5a de la pièce de liaison 10a. La partie de préhension 5a comprend un verrou 7a mobile en translation suivant l'axe longitudinal. Le verrou 7a est mobile entre une position d'accouplement dans laquelle la partie de préhension 5a est assemblée sur la pièce de liaison 10a (Fig 1) et une position de désaccouplement (non illustrée sur les figures) dans laquelle la partie de préhension 5a peut être désassemblée de la pièce de liaison 10a. Le verrou 7a comporte une extrémité avant qui est glissée sous une face inférieure de la pièce de liaison 10a dans la position d'accouplement. Un bouton de manoeuvre 8a est agencé sur la partie de préhension 5a et est fixé sur le verrou 7a pour permettre la commande du verrou 7a. Un récipient de cuisson muni d'une telle poignée a été décrit plus en détail, notamment dans le document EP3569119.

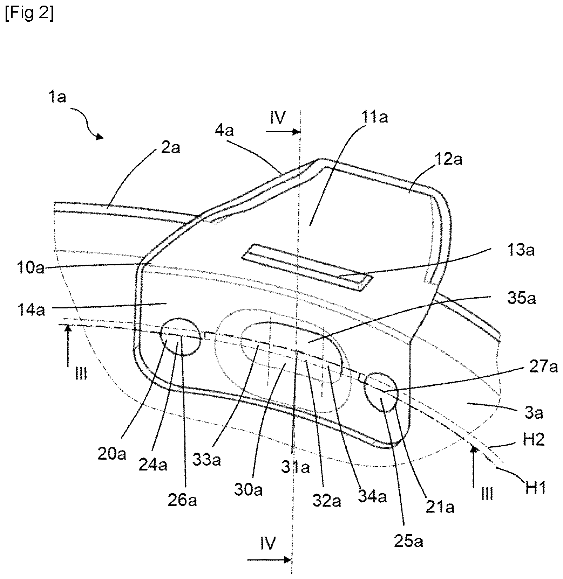

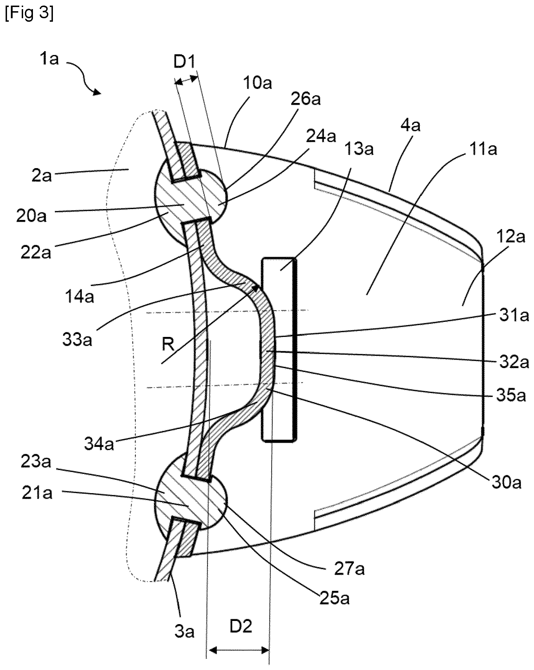

La pièce de liaison 10a comporte une portion axiale 14a qui s'étend parallèlement à la paroi latérale 3a de manière sensiblement verticale. La portion axiale 14a de la pièce de liaison 10a est fixée à la paroi latérale 3a par deux rivets 20a, 21a agencé dans un plan horizontal H1 (Fig 2). Chaque rivet 20a, 21a comporte une tête 22a, 23a agencée à l'intérieur de la calotte 2 du récipient de cuisson 1a (Fig 3) et un bouterollage 24a, 25a qui s'étend vers l'extérieur de la calotte 2 du récipient de cuisson 1a, radialement à la paroi latérale 3. Le bouterollage 24a, 25a comporte une extrémité libre 26a, 27a qui est agencée à une distance D1 (Fig 3) de la paroi latérale 3a, la distance D1 étant égale à 4 millimètres. Le bouterollage 24a, 25a est le résultat de l'opération de sertissage de l'extrémité libre du rivet 20a, 21a, opposé à la tête 22a, 23a, à l'aide d'une bouterolle, une fois le rivet 20a, 21a assemblé sur la calotte 2 et la pièce de liaison 10a. Le bouterollage 24a, 25a prend une forme de demi-sphère.

La portion axiale 14a de la pièce de liaison 10a comporte un bossage 30a de forme oblongue qui s'étend dans un plan horizontal H2 (Fig 2). Le bossage 30a comporte une extrémité libre arrondie 31a qui s'étend radialement à partir de la paroi latérale 2 sur une distance D2 égale à 10 millimètres. Dans un plan de coupe horizontal (Fig 3), l'extrémité libre arrondie 31a comporte une portion centrale 32a et deux portions latérales 33a, 34a. Sur les figures 2 et 3, la portion centrale 32a et les deux portions latérales 33a, 34a sont séparées par un trait mixte. La portion centrale 32a présente une forme de demi-cylindre d'axe légèrement incurvé et de rayon R égal à 10 millimètres. Les deux portions latérales 33a, 34a présentent une forme de quart de sphère de rayon R. Ainsi, l'extrémité libre arrondie 31a comporte une ligne de crête formé par des points équidistants de la paroi latérale 2a, parallèle à l'axe légèrement incurvé de la forme de demi-cylindre. L'extrémité libre arrondie 31a, notamment la ligne de crête, est agencée dans le plan horizontal H2, au-dessus du plan horizontal H1 et séparé du plan horizontal H1 par une distance égale à 1 millimètre.

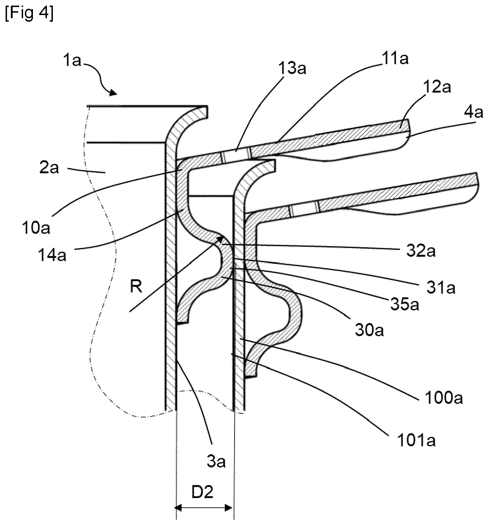

La pièce de liaison 10a est réalisée à partir d'un feuillard métallique en acier inoxydable d'épaisseur égale à 3 millimètres. Le feuillard métallique est produit pour présenter au moins une face avec une finition de type poli brillant ou poli miroir. Le feuillard subit des opérations de découpe, pliage et emboutissage du bossage. L'extrémité libre 31a arrondie comporte une face externe 35a réalisée à partir de l'au moins une face avec une finition de type poli brillant ou poli miroir du feuillard. La face externe 35a de l'extrémité libre arrondie 31a est destinée à venir en appui avant l'extrémité libre 26a, 27a du bouterollage 24a, 25a sur une surface interne 101a d'un récipient de cuisson 100a plus grand lorsque le récipient de cuisson 1a est rangé par empilage dans le récipient de cuisson plus grand 100a (Fig 4).

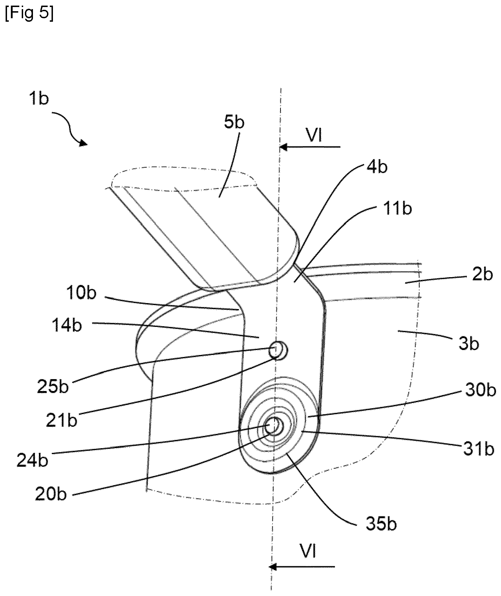

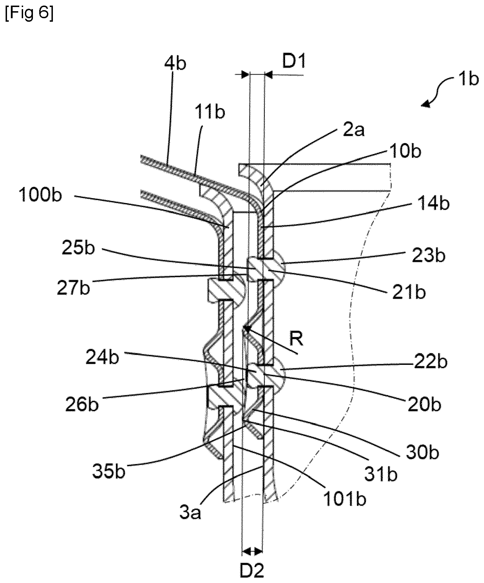

Dans un deuxième mode de réalisation illustré au figures 5 et 6, un récipient de cuisson 1b qui est également une casserole comporte une calotte 2b munie d'une paroi latérale 3b. Le récipient de cuisson 1b comporte une poignée 4b munie d'une pièce de liaison 10b. La pièce de liaison 10b comporte une portion radiale 11b qui s'étend radialement par rapport à la paroi latérale 5b dans un plan sensiblement horizontal, parallèle au plan de pose de la calotte 2b. La poignée 4b comporte une partie de préhension 5b qui est surmoulée sur la portion radiale 11b de la pièce de liaison 10b. La pièce de liaison 10b est fixée sur la paroi latérale 3b. La pièce de liaison 10b comporte une portion axiale 14b qui s'étend parallèlement à la paroi latérale 3b de manière sensiblement verticale. La portion axiale 14b de la pièce de liaison 10b est fixée à la paroi latérale 3b par deux rivets 20b, 21b agencé dans un plan vertical, l'un au-dessus de l'autre. Chaque rivet 20b, 21b comporte une tête 22b, 23b agencée à l'intérieur de la calotte 2b du récipient de cuisson 1b (Fig 6) et un bouterollage 24b, 25b qui s'étend vers l'extérieur de la calotte 2b du récipient de cuisson 1b, radialement à la paroi latérale 3b. Le bouterollage 24b, 25b comporte une extrémité libre 26b, 27b qui est agencée à une distance D1 de la paroi latérale 3b, la distance D1 étant égale à 3 millimètres

La portion axiale 14b de la pièce de liaison 10b comporte un bossage 30b de forme annulaire, sensiblement circulaire qui s'étend autour du rivet 20b agencé à une altitude la plus basse. Le bossage 30b comporte une extrémité libre arrondie 31b qui s'étend radialement à partir de la paroi latérale 3b sur une distance D2 égale à 5 millimètres. Dans un plan de coupe transversal (Fig 6), l'extrémité libre arrondie 31b présente une forme de V à pointe arrondie. L'extrémité libre arrondie 31b comporte un rayon R égal à 3 millimètres. Ainsi, l'extrémité libre arrondie 31b comporte une ligne de crête sensiblement circulaire, formée par des points équidistants de la paroi latérale 3b. L'extrémité libre arrondie 31b est destinée à venir en appui avant l'extrémité libre 26b, 27b du bouterollage 24b, 25b sur une surface interne 101b d'un récipient de cuisson 100b plus grand lorsque le récipient de cuisson 1b est rangé par empilage dans le récipient de cuisson 100b plus grand (Fig 6).

La pièce de liaison 10b est réalisée à partir d'un feuillard métallique de la même manière que la pièce de liaison 10a.

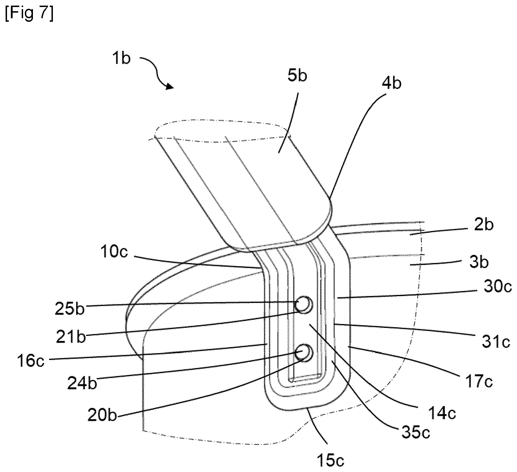

Dans une variante du deuxième mode de réalisation illustré à la figure 7, le récipient de cuisson 1b comporte une pièce de liaison 10c munie d'une portion axiale14c. La portion axiale 14c comporte un bossage 30c en forme de U qui entoure partiellement les deux rivets 20b, 21b. La portion axiale 14c comporte un bord inférieur 15c et deux bords latéraux 16c, 17c. Le bossage 30c en forme de U s'étend le long du bord inférieur 15c et des deux bords latéraux 16c, 17c. Le bossage 30c est muni d'une extrémité libre arrondie 31c, qui dans un plan de coupe transversal, présente comme dans le deuxième mode de réalisation une forme de V à pointe arrondie. Un tel agencement du bossage 30c, notamment le long des bords latéraux 16c, 17c garantit que l'extrémité libre arrondie 31c viendra toujours en appui avant l'extrémité libre 26b, 27b du bouterollage 24b, 25b sur une surface interne 101b d'un récipient de cuisson 100b plus grand lorsque le récipient de cuisson 1b est rangé par empilage dans le récipient de cuisson 100b plus grand

Bien entendu, l'invention n'est nullement limitée au mode de réalisation décrit et illustré qui n'a été donné qu'à titre d'exemple.

Ainsi, dans une variante de réalisation non représentée du premier mode de réalisation, la portion axiale 14a de la pièce de liaison 10a comporte un bossage qui entoure les deux rivets 20a, 21a. Le bossage comporte une extrémité libre arrondie de forme annulaire, sensiblement oblongue.

## Revendications

1. Récipient de cuisson (1a, 1b) comportant une paroi latérale (3a, 3b) et une poignée (4a, 4b), ladite poignée (4a, 4b) comprenant une pièce de liaison (10a, 10b, 10c) fixée sur la paroi latérale (3a, 3b) par des rivets (20a, 21a, 20b, 21b), chaque rivet (20a, 21a, 20b, 21b) comportant un bouterollage (24a, 25a, 24b, 25b) qui s'étend vers l'extérieur du récipient de cuisson (1a, 1b), radialement à la paroi latérale (3a, 3b), ledit bouterollage (24a, 25a, 24b, 25b) comportant une extrémité libre (26a, 27a, 26b, 27b) qui est agencée à une distance D1 de la paroi latérale (3a, 3b), ladite pièce de liaison (10a, 10b, 10c) comportant au moins un bossage (30a, 30b, 30c) qui s'étend radialement à la paroi latérale (3a, 3b), ledit au moins un bossage (30a, 30b, 30c) comprenant une extrémité libre arrondie (31a, 31b, 31c) qui est agencée à une distance D2 de la paroi latérale (3a, 3b), la distance D2 étant supérieure à la distance D1, **caractérisé en ce que** l'extrémité libre arrondie (31a, 31b, 31c) de l'au moins un bossage (30a, 30b, 30c) est destinée à venir en appui avant l'extrémité libre (26a, 27a, 26b, 27b) du bouterollage (24a, 25a, 24b, 25b) sur une surface interne d'un récipient de cuisson plus grand lorsque le récipient de cuisson (1a, 1b) est rangé par empilage dans le récipient de cuisson plus grand, l'extrémité libre arrondie (31a, 31b, 31c) présentant une forme non agressive qui ne dégrade pas la surface interne du récipient de cuisson plus grand en cas de chocs ou de mouvements relatifs entre les récipients de cuisson.

2. Récipient de cuisson (1a, 1b) selon la revendication 1, **caractérisé en ce que** la différence entre la distance D2 et la distance D1 est supérieure à 1 millimètre, de préférence supérieure à 2 millimètres.

3. Récipient de cuisson (1a, 1b) selon l'une quelconque des revendications 1 à 2, **caractérisé en ce que** la pièce de liaison (10a, 10b, 10c) est réalisée en un acier inoxydable présentant une finition polie au niveau de l'extrémité libre arrondie (31a, 31b, 31c).

4. Récipient de cuisson (1a) selon l'une quelconque des revendications 1 à 3, **caractérisé en ce que** la pièce de liaison (10a) est fixée sur la paroi latérale par deux rivets (20a, 21a), l'au moins un bossage (30a) étant agencé entre les deux rivets (20a, 21a).

5. Récipient de cuisson (1a) selon la revendication 4, **caractérisé en ce que** les deux rivets (20a, 21a) sont agencés dans un plan horizontal H1 et le bossage (30a) est agencé dans un plan horizontal H2, Le plan horizontal H1 étant séparé du plan horizontal H2 par une distance inférieure à 10 millimètres.

6. Récipient de cuisson (1b) selon l'une quelconque des revendications 1 à 3, **caractérisé en ce que** l'au moins un bossage (30b, 30c) entoure au moins partiellement au moins un rivet (20b, 21b).

7. Récipient de cuisson (1b) selon la revendication 6, **caractérisé en ce que** l'au moins un bossage (30b) présente une forme annulaire qui entoure au moins un rivet (20b).

8. Récipient de cuisson (1a, 1b) selon l'une quelconque des revendications 1 à 7, **caractérisé en ce que** l'extrémité libre arrondie (31a, 31b, 31c) de l'au moins un bossage (30a, 30b, 30c) comporte un rayon R supérieur à 2 millimètres.

9. Récipient de cuisson (1a) selon l'une quelconque des revendications 1 à 8, **caractérisé en ce que** la poignée (4a) comporte une partie de préhension (5a) agencée sur la pièce de liaison (10a) de manière amovible.

10. Récipient de cuisson (1a, 1b) selon l'une quelconque des revendications 1 à 9, **caractérisé en ce qu'**il est une poêle, une casserole, une sauteuse ou un faitout.

11. Récipient de cuisson (1a, 1b) selon l'une quelconque des revendications 1 à 10, **caractérisé en ce que** la pièce de liaison (10a, 10b, 10c) est réalisée à partir d'un feuillard métallique, le bossage (30a, 30b, 30c) étant réalisé par une opération d'emboutissage.

## Patentansprüche

1. Kochgefäß (1a, 1b), das eine Seitenwand (3a, 3b) und einen Griff (4a, 4b) umfasst, wobei der Griff (4a, 4b) ein Verbindungsstück (10a, 10b, 10c) umfasst, das an der Seitenwand (3a, 3b) durch Niete (20a, 21a, 20b, 21b) befestigt ist, wobei jeder Niet (20a, 21a, 20b, 21b) eine Aufweitung (24a, 25a, 24b, 25b) umfasst, die sich radial zur Seitenwand (3a, 3b) zur Außenseite des Kochgefäßes (1a, 1b) erstreckt, wobei die Aufweitung (24a, 25a, 24b, 25b) ein freies Ende (26a, 27a, 26b, 27b) umfasst, das in einem Abstand D1 von der Seitenwand (3a, 3b) angeordnet ist, wobei das Verbindungsstück (10a, 10b, 10c) mindestens einen Vorsprung (30a, 30b, 30c) umfasst, der sich radial zur Seitenwand (3a, 3b) erstreckt, wobei der mindestens eine Vorsprung (30a, 30b, 30c) ein abgerundetes freies Ende (31a, 31b, 31c) umfasst, das in einem Abstand D2 von der Seitenwand (3a, 3b) angeordnet ist, wobei der Abstand D2 größer ist als der Abstand D1, **dadurch gekennzeichnet, dass** das abgerundete freie Ende (31a, 31b, 31c) des mindestens einen Vorsprungs (30a, 30b, 30c) dazu bestimmt ist, vor dem freien Ende (26a, 27a, 26b, 27b) der Aufweitung (24a, 25a, 24b, 25b) an einer Innenfläche eines größeren Kochgefäßes in Anlage zu kommen, wenn das Kochgefäß (1a, 1b) durch Stapeln in dem größeren Kochgefäß aufgeräumt wird, wobei das abgerundete freie Ende (31a, 31b, 31c) eine nicht aggressive Form aufweist, die die Innenfläche des größeren Kochgefäßes im Falle von Stößen oder Relativbewegungen zwischen den Kochgefäßen nicht beschädigt.

2. Kochgefäß (1a, 1b) nach Anspruch 1, **dadurch gekennzeichnet, dass** die Differenz zwischen dem Abstand D2 und dem Abstand D1 größer als 1 Millimeter, vorzugsweise größer als 2 Millimeter, ist.

3. Kochgefäß (1a, 1b) nach einem der Ansprüche 1 bis 2, **dadurch gekennzeichnet, dass** das Verbindungsstück (10a, 10b, 10c) aus einem rostfreien Stahl hergestellt ist, der im Bereich des abgerundeten freien Endes (31a, 31b, 31c) eine polierte Oberfläche aufweist.

4. Kochgefäß (1a) nach einem der Ansprüche 1 bis 3, **dadurch gekennzeichnet, dass** das Verbindungsstück (10a) durch zwei Niete (20a, 21a) an der Seitenwand befestigt ist, wobei der mindestens eine Vorsprung (30a) zwischen den zwei Nieten (20a, 21a) angeordnet ist.

5. Kochgefäß (1a) nach Anspruch 4, **dadurch gekennzeichnet, dass** die zwei Niete (20a, 21a) in einer horizontalen Ebene H1 angeordnet sind und der Vorsprung (30a) in einer horizontalen Ebene H2 angeordnet ist, wobei die horizontale Ebene H1 von der horizontalen Ebene H2 um einen Abstand von kleiner als 10 Millimeter getrennt ist.

6. Kochgefäß (1b) nach einem der Ansprüche 1 bis 3, **dadurch gekennzeichnet, dass** der mindestens eine Vorsprung (30b, 30c) mindestens einen Niet (20b, 21b) mindestens teilweise umgibt.

7. Kochgefäß (1b) nach Anspruch 6, **dadurch gekennzeichnet, dass** der mindestens eine Vorsprung (30b) eine ringförmige Form aufweist, die mindestens einen Niet (20b) umgibt.

8. Kochgefäß (1a, 1b) nach einem der Ansprüche 1 bis 7, **dadurch gekennzeichnet, dass** das abgerundete freie Ende (31a, 31b, 31c) des mindestens einen Vorsprungs (30a, 30b, 30c) einen Radius R umfasst, der größer als 2 Millimeter ist.

9. Kochgefäß (1a) nach einem der Ansprüche 1 bis 8, **dadurch gekennzeichnet, dass** der Griff (4a) einen Greifteil (5a) umfasst, der abnehmbar am Verbindungsstück (10a) angeordnet ist.

10. Kochgefäß (1a, 1b) nach einem der Ansprüche 1 bis 9, **dadurch gekennzeichnet, dass** es eine Pfanne, ein Stieltopf, eine Schmorpfanne oder ein Kochtopf ist.

11. Kochgefäß (1a, 1b) nach einem der Ansprüche 1 bis 10, **dadurch gekennzeichnet, dass** das Verbindungsstück (10a, 10b, 10c) aus einem Metallstreifen hergestellt ist, wobei der Vorsprung (30a, 30b, 30c) durch einen Tiefziehvorgang hergestellt ist.

## Claims

1. Cooking vessel (1a, 1b) comprising a side wall (3a, 3b) and a handle (4a, 4b), said handle (4a, 4b) comprising a connecting part (10a, 10b, 10c) fixed on the side wall (3a, 3b) by rivets (20a, 21a, 20b, 21b), each rivet (20a, 21a, 20b, 21b) comprising a heading (24a, 25a, 24b, 25b) which extends outwards from the cooking vessel (1a, 1b), radially to the side wall (3a, 3b), said heading (24a, 25a, 24b, 25b) comprising a free end (26a, 27a, 26b, 27b) which is arranged at a distance D1 from the side wall (3a, 3b), said connecting part (10a, 10b, 10c) comprising at least one boss (30a, 30b, 30c) which extends radially to the side wall (3a, 3b), said at least one boss (30a, 30b, 30c) comprising a rounded free end (31a, 31b, 31c) which is arranged at a distance D2 from the side wall (3a, 3b), the distance D2 being greater than the distance D1, **characterised in that** the rounded free end (31a, 31b, 31c) of the at least one boss (30a, 30b, 30c) is intended to bear before the free end (26a, 27a, 26b, 27b) of the heading (24a, 25a, 24b, 25b) on an internal surface of a larger cooking vessel, when the cooking vessel (1a, 1b) is stored by stacking in the larger cooking vessel, the rounded free end (31a, 31b, 31c) having a non-aggressive shape which does not damage the internal surface of the larger cooking vessel in case of relative impacts or movements between the cooking vessels.

2. Cooking vessel (1a, 1b) according to claim 1, **characterised in that** the difference between the distance D2 and the distance D1 is greater than 1 millimetre, preferably greater than 2 millimetres.

3. Cooking vessel (1a, 1b) according to any one of claims 1 to 2, **characterised in that** the connecting part (10a, 10b, 10c) is made of a stainless steel having a polished finish at the rounded free end (31a, 31b, 31c).

4. Cooking vessel (1a) according to any one of claims 1 to 3, **characterised in that** the connecting part (10a) is fixed on the side wall by two rivets (20a, 21a), the at least one boss (30a) being arranged between the two rivets (20a, 21a).

5. Cooking vessel (1a) according to claim 4, **characterised in that** the two rivets (20a, 21a) are arranged in a horizontal plane H1 and the boss (30a) is arranged in a horizontal plane H2, the horizontal plane H1 being separated from the horizontal plane H2 by a distance less than 10 millimetres.

6. Cooking vessel (1b) according to any one of claims 1 to 3, **characterised in that** the at least one boss (30b, 30c) surrounds at least partially at least one rivet (20b, 21b).

7. Cooking vessel (1b) according to claim 6, **characterised in that** the at least one boss (30b) has an annular shape which surrounds at least one rivet (20b).

8. Cooking vessel (1a, 1b) according to any one of claims 1 to 7, **characterised in that** the rounded free end (31a, 31b, 31c) of the at least one boss (30a, 30b, 30c) comprises a radius R greater than 2 millimetres.

9. Cooking vessel (1a) according to any one of claims 1 to 8, **characterised in that** the handle (4a) comprises a gripping part (5a) removably arranged on the connecting part (10a).

10. Cooking vessel (1a, 1b) according to any one of claims 1 to 9, **characterised in that** it is a stove, a saucepan, a frying pan or a stewpot.

11. Cooking vessel (1a, 1b) according to any one of claims 1 to 10, **characterised in that** the connecting part (10a, 10b, 10c) is made from a metal strip, the boss (30a, 30b, 30c) being made by a stamping operation.
